# EUROPEAN PATENT APPLICATION

(11) **EP 4 732 724 A2**
(43) Date of publication of application: **29.04.2026**
(21) Application number: 26163629.4
(22) Date of filing: 25.05.2021
(51) Int. Cl.: A47J 31/00

(54) **BEVERAGE MACHINE AND METHOD OF PRIMING A BEVERAGE MACHINE**

(30) Priority: 02.06.2020 US 202063033271 P
(62) Divisional of application: 21734590.9
(71) Applicant: Luigi Lavazza S.p.A., 10152 Torino (IT)
(72) Inventor: HAY, David, Basingstoke, RG24 9LG (GB)
(74) Representative: Archer, Graham John

(57) **Abstract**

A method for priming a beverage machine prior to vending a beverage. The beverage machine may include a reservoir tank, a hot tank, and a recirculation conduit that form a recirculation loop. The method may include measuring a temperature of a liquid in a hot tank of the beverage machine at boot-up. Upon the beverage machine being instructed to vend a beverage, the method may include priming the beverage machine by circulating a priming volume of the liquid through the recirculation loop. The priming volume may be a first volume when the temperature of the liquid in the hot tank is below a first threshold temperature and a second volume when the temperature of the liquid in the hot tank is above the first threshold temperature, the first volume being greater than the second volume. Idle time of the beverage machine may result in adjustments to the priming volume.

## Description

### CROSS-REFERENCE TO RELATED APPLICATIONS

The present application claims priority to United States Provisional Patent Application Serial No. 63/033,271, filed June 2, 2020, the entirety of which is incorporated herein by reference.

### BACKGROUND

Beverage machines are found in homes and offices throughout the world, and there is a continuing need to design and create a beverage machine that can generate an optimal beverage. One of the most common types of beverage machine found in offices and homes is a coffee machine, and such coffee machines may be used to make both hot and cold beverages. Such beverage machines may be primed prior to each use to ensure that there is a consistent starting point for the liquid that is to be used to generate the desired beverage. This ensures that a consistent water volume is dispensed and that the water delivery temperature is consistent. However, there exists a need for optimizing the volume of liquid that is used during the priming to minimize the amount of time that a user must wait before the beverage machine is ready to make a beverage while maximizing consistency in the volume and temperature of the water being dispensed.

### BRIEF SUMMARY

The invention may be directed to a method and system for priming a beverage machine prior to vending a beverage. The beverage machine may include a reservoir tank, a hot tank, a recirculation conduit, and a dispensing conduit. The reservoir tank, the hot tank, and the recirculation conduit may form a recirculation loop. The method may include, upon the beverage machine being powered on, measuring a start-up temperature of a liquid in a hot tank of the beverage machine. Then, upon the beverage machine receiving a request to vend a beverage, the method may include priming the beverage machine by circulating a priming volume of the liquid through the recirculation loop without dispensing the liquid from the beverage machine. The priming volume may be a first volume when the start-up temperature of the liquid in the hot tank is below a first threshold temperature and a second volume when the start-up temperature of the liquid in the hot tank is above the first threshold temperature, the first volume being greater than the second volume.

In one aspect, the invention may be a method of priming a beverage machine comprising: upon a beverage machine being powered from an off state to an on state, measuring a start-up temperature of a liquid in a hot tank of the beverage machine; upon the beverage machine receiving instructions to vend a beverage, priming the beverage machine by circulating a priming volume of the liquid through a closed loop that comprises a reservoir tank, the hot tank, and a recirculation conduit; and wherein the priming volume is a first volume when the start-up temperature of the liquid in the hot tank is below a first threshold temperature and a second volume when the start-up temperature of the liquid in the hot tank is above the first threshold temperature, the first volume being greater than the second volume.

In another aspect, the invention may be a beverage machine comprising: a fluid subsystem comprising a reservoir tank, a hot tank, at least one dispensing conduit, and at least one recirculation conduit that are fluidly coupled together, wherein the reservoir tank, the hot tank and the recirculation conduit form a recirculation loop; an electronics subsystem comprising a heater for heating a liquid in the hot tank, a temperature sensor for measuring a temperature of the liquid in the hot tank, a pump, a first normally-closed valve positioned between the hot tank and the at least one dispensing conduit, a second normally-closed valve positioned between the hot tank and the at least one recirculation conduit, and a controller operably coupled to the heater, the temperature sensor, the pump, and the first and second normally-closed valves; wherein upon the beverage machine being powered from an off state to an on state, the controller is configured to record a start-up temperature of the liquid in the hot tank as measured by the temperature sensor; wherein upon the beverage machine receiving instructions to vend a beverage, the controller is configured to prime the beverage machine by activating the pump and opening the second normally-closed valve to circulate a priming volume of the liquid through the recirculation loop; and wherein the priming volume is a first volume when the start-up temperature of the liquid in the hot tank is below a first threshold temperature and a second volume when the start-up temperature of the liquid in the hot tank is above the first threshold temperature, the first volume being greater than the second volume.

In still another aspect, the invention may be a method of priming a beverage machine comprising: upon a beverage machine being powered from an off state to an on state: measuring a start-up temperature of a liquid in a hot tank of the beverage machine; upon the beverage machine receiving instructions to vend a beverage and prior to vending the beverage: determining an idle time of the beverage machine; and priming the beverage machine by circulating a priming volume of the liquid through a closed loop that comprises a reservoir tank, the hot tank, and a recirculation conduit; and wherein the priming volume is a greater of a temperature-based volume determined based on the start-up temperature of the liquid in the hot tank and a time-based volume determined based on the idle time of the beverage machine.

In yet another aspect, the invention may be a method of priming a beverage machine that is configured to vend beverages at multiple temperatures, the method comprising: upon receiving instructions to vend a beverage at a temperature that is above a pre-determined temperature and prior to vending the beverage, priming the beverage machine by circulating a priming volume of liquid through a closed recirculation loop of the beverage machine that comprises a reservoir tank, a hot tank, and a recirculation conduit; wherein the priming volume of the liquid is a first priming volume when a preceding beverage made in an immediately preceding beverage vend was above the predetermined temperature; and wherein the priming volume of the liquid is a second priming volume when the preceding beverage made in the immediately preceding beverage vend was below the predetermined temperature, the second volume being greater than the first volume.

In still another embodiment, the invention may be a beverage machine comprising: a fluid subsystem comprising a reservoir tank, a hot tank, a cold tank, at least one dispensing conduit, and at least one recirculation conduit that are fluidly coupled together, wherein the reservoir tank, the hot tank and the recirculation conduit form a recirculation loop; an electronics subsystem comprising a heater for heating a liquid in the hot tank, a temperature sensor for measuring a temperature of the liquid in the hot tank, a pump, a first normally-closed valve positioned between the hot tank and the at least one dispensing conduit, a second normally-closed valve positioned between the hot tank and the at least one recirculation conduit, and a controller operably coupled to the heater, the temperature sensor, the pump, and the first and second normally-closed valves; wherein upon the beverage machine receiving instructions to vend a beverage, the controller is configured to prime the beverage machine by activating the pump and opening the second normally-closed valve to circulate a priming volume of the liquid through the recirculation loop; and wherein the priming volume is a first volume when an immediately preceding beverage vended with the beverage machine had a vend temperature that is above the predetermined temperature and a second volume when the immediately preceding beverage vended with the beverage machine had a vend temperature that is below the predetermined temperature, the second volume being greater than the second volume.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
FIG. 1 is a schematic diagram of a beverage machine in accordance with an embodiment of the present invention;
FIG. 2 is a block diagram of an electronics subsystem of the beverage machine of FIG. 1;
FIG. 3 is a flow chart illustrating the steps for determining a temperature-based volume of liquid for priming the beverage machine of FIG. 1;
FIG. 4 is a flow chart illustrating the steps for determining a time-based volume of liquid for priming the beverage machine of FIG. 1;
FIG. 5 is a flow chart illustrating the steps for determining whether to use the temperature-based or time-based volume of liquid for priming the beverage machine of FIG. 1; and
FIG. 6 is a flow chart illustrating the steps for determining a priming volume for the beverage machine of FIG. 1 which vends beverages at multiple temperatures.

### DETAILED DESCRIPTION

The following description of the preferred embodiment(s) is merely exemplary in nature and is in no way intended to limit the invention, its application, or uses.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

Processor or controllers described herein may be any central processing unit (CPU), graphics processing unit (GPU), microprocessor, micro-controller, computational, programmable device, circuit, either alone or in combination, that is configured for executing computer program instructions (e.g., code). Various processors may be embodied in computer and/or server hardware of any suitable type (e.g., desktop, laptop, notebook, tablets, cellular phones, etc.) and may include all the usual ancillary components necessary to form a functional data processing device including without limitation a bus, software and data storage such as volatile and non-volatile memory, input/output devices, graphical user interfaces (GUIs), removable data storage, and wired and/or wireless communication interface devices including Wi-Fi, Bluetooth (*e.g*., classic Bluetooth and Bluetooth Low Energy), LAN, etc.

Computer-executable instructions or programs (e.g., software or code) and data described herein may be programmed into and tangibly embodied in a non-transitory computer-readable medium that is accessible to and retrievable by a respective processor as described herein which configures and directs the processor to perform the desired functions and processes by executing the instructions encoded in the medium. A device embodying a programmable processor configured to such non-transitory computer-executable instructions or programs may be referred to as a "programmable device," or "device," and multiple programmable devices in mutual communication may be referred to as a "programmable system." It should be noted that non-transitory "computer-readable medium" as described herein may include, without limitation, any suitable volatile or non-volatile memory including random access memory (RAM) and various types thereof, read-only memory (ROM) and various types thereof, USB flash memory, and magnetic or optical data storage devices (e.g., internal/external hard disks, floppy discs, magnetic tape CD-ROM, DVD-ROM, optical disk, ZIP^{™} drive, Blu-ray disk, and others), which may be written to and/or read by a processor operably connected to the medium.

In certain embodiments, the present inventions may be embodied in the form of computer-implemented processes and apparatuses such as processor-based data processing and communication systems or computer systems for practicing those processes. The present inventions may also be embodied in the form of software or computer program code embodied in a non-transitory computer-readable storage medium, which when loaded into and executed by the data processing and communications systems or computer systems, the computer program code segments configure the processor to create specific logic circuits configured for implementing the processes.

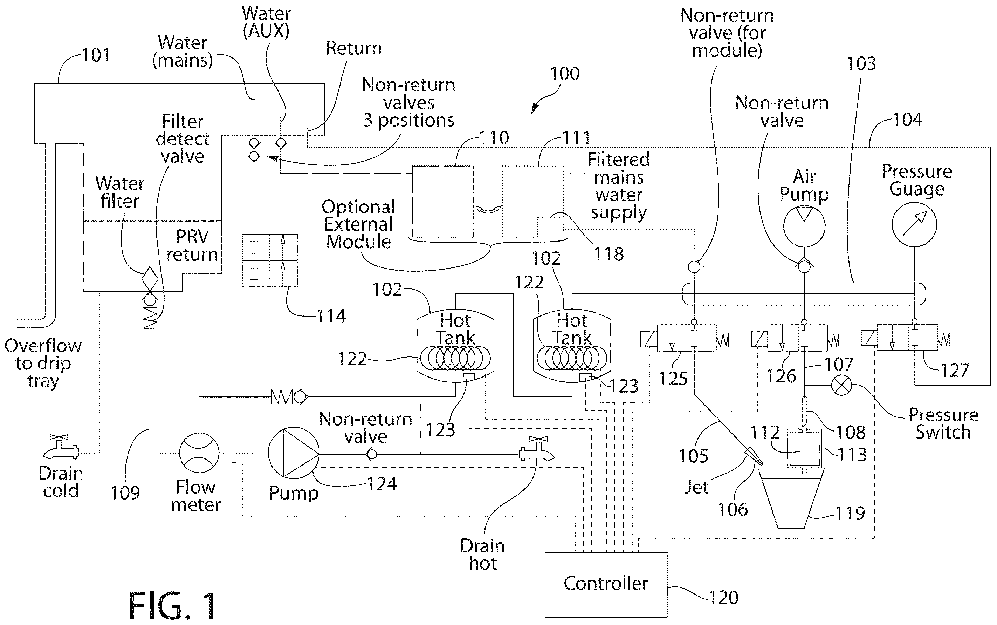

Referring to FIG. 1, a schematic diagram of a beverage machine 100 is illustrated. The beverage machine 100 comprises a fluid subsystem through which a liquid flows during priming of the beverage machine 100 and during use of the beverage machine 100 to generate/vend a beverage. The beverage machine 100 also comprises an electronics subsystem that includes the electronic components required for proper operation of the beverage machine 100. The fluid subsystem and the electronics subsystem work together to prime the beverage machine 100 as needed and to generate a beverage using the beverage machine 100 upon receipt of instructions to do so. Specifically, the beverage machine 100 may undergo a priming operation prior to each use of the beverage machine 100 to vend a beverage. The beverage machine 100 may also perform a priming operation upon boot-up (i.e., upon being powered or activated from an off state to an on state), although this is not required in all embodiments. Such priming operation ensures a consistent water volume is dispensed with each vend, ensures a consistent water delivery temperature with each vend, and ensures that a container holding a beverage ingredient is consistently opened during a vending operation. The details of such priming operations will be provided in greater detail below with specific reference to FIGS. 1 and 3-6.

In addition to the priming operation, the beverage machine 100 is also configured to generate a beverage upon receiving instructions to generate a beverage, which may be accomplished by a user interacting with a user interface or display on the beverage machine 100, pressing buttons on the beverage machine 100, transmitting signals from an electronic device that is separate from but operably coupled to the beverage machine 100, or the like. In some embodiments, the beverage machine 100 may be configured to generate or vend a coffee beverage, which may include drip coffee, hot coffee, cold coffee, and specialty coffee drinks such as cappuccino, latte, macchiato, or the like. However, the invention is not to be so limited in all embodiments and the beverage machine 100 may be configured to generate or vend other beverages, including tea, soup, hot chocolate, and the like.

The fluid subsystem of the beverage machine 100 comprises a reservoir tank 101, one or more hot tanks 102, a manifold 103, a recirculation conduit 104 extending from the manifold 103 back to the reservoir tank 101, a jet dispense conduit 105 extending from the manifold 103 to a jet nozzle 106, an injector dispense conduit 107 extending from the manifold 103 to an injector nozzle 108, and a flow conduit 109 extending from the reservoir tank 101 to the one or more hot tanks 102 and from the one or more hot tanks 102 to the manifold 103. In the exemplified embodiment, the reservoir tank 101 is fluidly coupled to a mains water supply 114 so that the reservoir tank 101 may be automatically filled with water from the mains water supply 114 as needed. In that regard, there may be a liquid level sensor located in the reservoir tank 101 that communicates with a controller so that the reservoir tank 101 is automatically filled when the liquid level sensor indicates a liquid level below a lower threshold. In other embodiments, a user may pour water (or other liquid) into the reservoir tank 101 to fill the reservoir tank 101 as needed. In either case, the reservoir tank 101 holds a supply of a liquid (i.e., water) that is to be used to prime the beverage machine 100 and/or to generate or otherwise create a beverage upon receiving instructions to generate the beverage.

In the exemplified embodiment, the fluid subsystem also comprises an auxiliary water tank 110 and/or a cold tank 111. In some embodiments, one, but not both simultaneously, of the auxiliary water tank 110 and the cold tank 111 may be included as a part of the fluid subsystem. In other embodiments, the auxiliary water tank 110 and the cold tank 111 may be included as part of the fluid subsystem simultaneously. In still other embodiments the auxiliary water tank 110 and the cold tank 111 may be omitted. Thus, in some embodiments the auxiliary water tank 110 and the cold tank 111 are optional tanks that may be used as needed or desired by the end user. The auxiliary water tank 110 and the cold tank 111 may be optional external devices that are configured to be operably coupled to the other components of the beverage machine 100 when used.

The auxiliary water tank 110 may be used to increase the holding capacity of the reservoir tank 101. Specifically, the auxiliary water tank 110 holds an additional supply of the liquid that can be use in the generation of a beverage when the liquid level in the reservoir tank 101 is low. Thus, when the auxiliary water tank 110 is used, the auxiliary water tank 110 is fluidly coupled to the reservoir tank 101 so that during operation of the beverage machine 100 liquid (i.e., water) can be pumped or otherwise moved from the auxiliary water tank 110 and into the reservoir tank 101 for use in generating a beverage.

The cold tank 111 may be used when the beverage machine 100 is configured to generate or vend cold drinks, such as cold coffee or the like. When the cold tank 111 is used, the cold tank 111 may be fluidly coupled to the manifold 103 but not to the reservoir tank 101 so that the liquid from the cold tank 111 may be made to flow directly to the manifold 103 where it can then be dispensed either through the jet dispense conduit 105 and the jet nozzle 106 or through the injector dispense conduit 107 and the injector nozzle 108 without having to first pass through the hot tanks 102. This is because the cold tank 111 includes a cooling subsystem 118 that cools the liquid contained in the cold tank 111, and thus it would not be desirable to flow the cooled liquid from the cold tank 111 to the hot tank 102. Rather, when a user selects to vend a cold beverage, the liquid flows directly from the cold tank 111 to the jet or injector nozzles 106, 108 without passing through the hot tanks 102.

In some embodiments, the cooling subsystem 118 of the cold tank 111 may comprise the basic components of a refrigeration system, such as a compressor, condenser, expansion valve, and evaporator. A refrigerant or cooling fluid may flow through the aforementioned components to cool or chill (i.e., remove heat from) any liquid contained in the cold tank 111. The cooling subsystem 118 may be a closed refrigeration system such that once charged and mechanically sealed there is only a single path that the refrigerant can take through the components noted above. Of course, other techniques, components, or the like may be used as part of the cooling subsystem 118 so long as it is configured to cool or reduce the temperature of the liquid contained in the cold tank 111 so that the liquid in the cold tank 111 can be used in the generation of a cold beverage.

It should be appreciated that as used herein, a cold beverage is a beverage having a temperature that is less than 40°C, and more specifically les than 30°C, and still more specifically less than 20°C or less than 10°C. Thus, the liquid in the cold tank 111 must have a temperature that is less than the aforementioned temperatures in order to generate a cold beverage. Furthermore, a hot beverage is one that has a temperature greater than 70°C when first made, and more specifically a hot beverage has a temperature between that is greater than 80°C, or greater than 90°C. The hot tanks 102 are configured to heat the liquid to temperatures in the aforementioned ranges as the liquid flows into and through the hot tanks 102 so that the liquid can be used to generate the hot beverages as described herein.

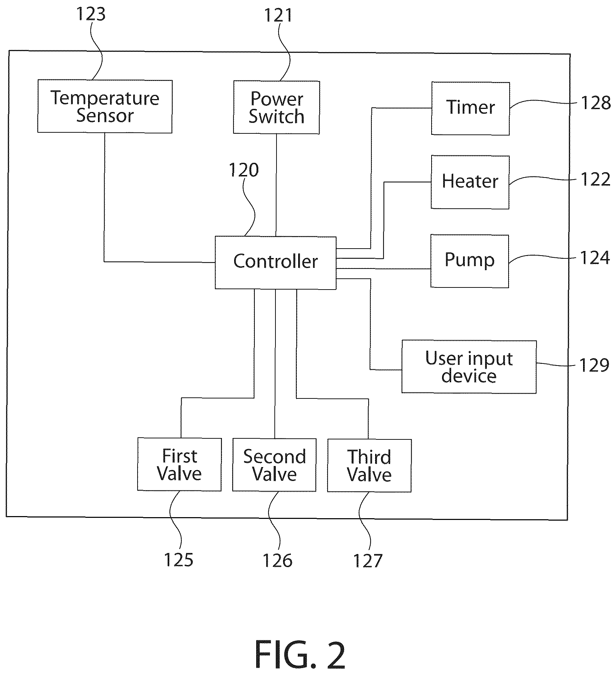

Referring to FIGS. 1 and 2, the electronic subsystem of the beverage machine 100 generally comprises a controller 120, a power switch 121 for powering the beverage machine 100 on and off (between an off state and an on state), a heater 122 located within each of the hot tanks 102, a temperature sensor 123 located within each of the hot tanks 102, a pump 124 for pumping the liquid from the reservoir tank 101 to the manifold 103, a first valve 125 located along the jet dispense conduit 105 (or between the manifold 103 and the jet dispense conduit 105), a second valve 126 located along the injector dispense conduit 107 (or between the manifold 103 and the injector dispense conduit 107), a third valve 127 located along the recirculation conduit 104 (or between the manifold 103 and the recirculation conduit 104), a timer 128, and a user input device 129. In the exemplified embodiment, the controller 120 is operably coupled to the power switch 121, the heater 122, the temperature sensor 123, the pump 124, the first, second and third valves 125, 126, 127, the timer 128, and the user input device 129. Although not shown, the controller 120 is also operably coupled to inlet valves of the mains water supply 114, the auxiliary water tank 110 (specifically, a tank level input and pump output), the cold tank 111 (specifically, a status input, water pump output, and air pump output), and a reservoir float switch located within the reservoir tank 101 to monitor a level of the liquid in the reservoir tank 101.

In the exemplified embodiment, the pump 124 is located along the flow conduit 109 between the reservoir tank 101 and the hot tanks 102. However, the invention is not to be so limited in all embodiments and the pump 124 may be positioned at other locations along the conduits so long as it remains capable of pumping the liquid from the reservoir tank 101 to the manifold 103 for dispensing into a cup. The pump 124 can be any type or style of pump configured for pumping fluids through a fluid subsystem as described herein. There may be a flow meter positions just upstream of the pump 124 as shown in FIG. 1.

The power switch 121 may comprise a button on the beverage machine 100 or an icon on a touch screen or graphical user interface or display on the beverage machine 100. In other embodiments, the power switch 121 may be a toggle switch, a slide switch, or the like located on the beverage machine 100 that can be actuated by a user to alter the beverage machine from an off state to an on state. The power switch 121 may be a part of the user input device 129 in some embodiments. A user may actuate the power switch 121 to power the beverage machine 100 from the off state to the on state and to turn the beverage machine from the on state to the off state as may be desired.

Due to the operable coupling between the controller 120 and the other components of the electronics subsystem, the controller 120 is configured to control operation of the beverage machine 100 by enabling the controller 120 to control activation of the pump 124 and the opening and closing of the first, second, and third valves 125, 126, 127 based on instructions or information received from the user input device 129 (i.e., buttons, touch screen, user interactive display, graphical user interface, external electronic device, or the like), the temperature sensor 123, and/or the timer 128. The controller 120 may be a general purpose computer having a memory that stores instructions for carrying out various functions as will be described in greater detail herein. Thus, for example without limitation, the controller 120 may receive information/data from the temperature sensor 123 and process that information/data through an algorithm to dictate the operations that will be taken by the controller 120 and how the controller 120 will control actuation/activation of the pump 124 and the valves 125, 126, 127. The functions of the controller 120 will be described in greater detail below particularly during a discussion of the priming operation of the beverage machine 100.

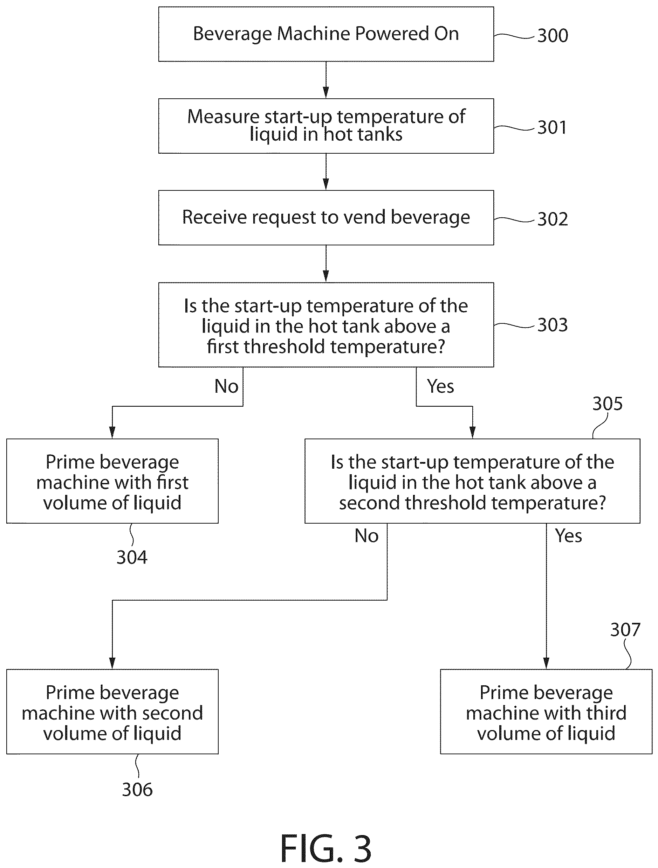

Briefly, with more detailed disclosure provided below, during a priming operation the controller 120 may open the third valve 127 and activate the pump 124 to flow (or circulate) the liquid through a closed recirculation loop that includes the reservoir tank 101, the flow conduit 109, the hot tanks 102, the manifold 103, and the recirculation conduit 104 where the liquid is carried back into the reservoir tank 101. During the priming operation, no liquid is lost and the liquid is simply circulated through the closed recirculation loop. This circulation of the liquid through the closed recirculation loop serves to heat up the liquid as it passes through the hot tanks 102 and to heat up the conduits as the heated fluid flows through the conduits. The circulation of the liquid during the priming operation also ensures that there is a consistent starting point when a beverage is to be vended with the beverage machine 100. Specifically, the priming operation may take place before a vend to ensure that the manifold 103 is completely full of hot liquid to ensure that there is a consistent starting point each time a beverage is made/vended with the beverage machine 100. The priming operation will be described in much greater detail below with specific reference to FIGS. 3-6.

During beverage vending with the beverage machine 100, the controller 120 may open the first valve 125 and activate the pump 124 to dispense the liquid from the reservoir tank 101, through the flow conduit 109, the hot tanks 102, and the manifold 103, and through the jet dispense conduit 105 for dispensing into a cup 119 through the jet dispense nozzle 106. This may be used to enhance a drink, such as to foam a milk powder by injecting the liquid into the cup 119 at a higher velocity (i.e., when the beverage being made is a latte or cappuccino). Finally, the controller 120 may open the second valve 126 and activate the pump 124 to dispense the liquid from the reservoir tank 101, through the flow conduit 109, the hot tanks 102, and the manifold 103, and through the injector dispense conduit 107 for injecting the liquid into the cup 119 through the injector dispense nozzle 108. Prior to passing into the cup 119, the liquid may flow through a beverage ingredient, as discussed further below.

One of the heaters 122 is located within each of the hot tanks 102 to heat the liquid as it flows through or sits within the hot tanks 102. In some embodiments, the heaters 122 may be activated and generating heat any time that the beverage machine 100 is in an on state. In other embodiments, the heaters 122 may be powered on and off as needed during use of the beverage machine 100 due to their operable coupling to the controller 120. Thus, the controller 120 may control the activation/deactivation status of the heaters 122 as needed based on the temperature of the liquid in the hot tanks 102, the length of time between vends, the desire to conserve energy, or the like. In the exemplified embodiment, the heater 122 is located inside of the hot tanks 102, but the invention is not to be so limited in all embodiments and the heater 122 could be located on an outside of the hot tanks 102 in other embodiments while still being configured to heat the liquid located in the hot tanks 102. The heaters 122 may be resistive heating elements, metal heating elements, ceramic heating elements, semiconductor heating elements, or any other type of heating element that is capable of heating a liquid in a tank.

In the exemplified embodiment, one of the temperature sensors 123 is located in each of the hot tanks 102 for monitoring and/or measuring the temperature of the liquid contained in the hot tanks 102. As noted above, the temperature sensors 123 are operably coupled to the controller 120 so that data indicative of the temperature of the liquid in the hot tanks 102 can be transmitted to the controller 120. The controller 120 can use this information for various purposes, including determining an amount of volume to use during a priming sequence as described in greater detail below. The temperature sensor 123 may be a thermistor, a thermometer, a thermocouple, a passive infrared sensor, a resistive temperature detector, a semiconductor based integrated circuit, or any other type of sensor capable of measuring the temperature of a liquid contained in the hot tanks 102.

In the exemplified embodiment, each of the first, second, and third valves 125, 126, 127 is a solenoid valve that is operably coupled to the controller 120 so that the controller 120 can control activating (i.e., opening and closing) the first, second, and third valves 125, 126, 127 to perform various desired operations (such as priming operations and beverage vending operations). Furthermore, in some embodiments the first, second, and third valves 125, 126, 127 may be normally-closed valves, meaning they remain closed to prevent the flow of liquid therethrough until activated (or powered) into an open position. However, the first, second, and third valves 125, 126, 127 need not be solenoid valves in all embodiments and can be any type of valve capable of being opened and closed automatically by the controller 120. For example, the first, second, and third valves 125, 126, 127 could be coaxial valves, angle seat valves, or the like in various different embodiments.

Generally only one of the first, second, and third valves 125, 126, 127 will be open at a time depending on the desired direction of flow of the liquid. The first, second, and third valves 125, 126, 127 may all be closed when the beverage machine 100 is neither vending a beverage nor performing a priming sequence. For example, the first, second, and third valves 125, 126, 127 may be normally closed two port valves in some embodiments that are only opened when activated by the controller 120. It should be appreciated that the term "vend" as used herein means the use of the beverage machine 100 to generate or produce a beverage. Thus, a single vend is a single operation of the beverage machine 100 to generate a single beverage. An immediately preceding vend is a vend that was completed most recently.

To use the beverage machine 100 to generate or vend a beverage, a user will first place a beverage ingredient container 112 into a container receiving chamber 113 of the beverage machine 100. The container receiving chamber 113 may become accessible in some embodiments when a door of the beverage machine 100 opens either automatically or by manual action of a user. For example, a door providing access to the container receiving chamber 113 may open automatically upon a user selecting a beverage to be made by the beverage machine 100. In such embodiments, the user will select the beverage type first (described below) and then place the beverage ingredient container 112 into the container receiving chamber 113 of the beverage machine 100. The beverage ingredient container 112 may be a capsule, a sachet, or any other type of container that contains a beverage ingredient (such as coffee grounds, tea leaves, soup base, cocoa powder, or the like).

Next, the user will select a beverage type to be made by the beverage machine 100 using the user input device 129. As noted above, this may be achieved by a user pressing a button on the beverage machine 100, interacting with a user interactive display such as a touch screen (i.e., user in put device 129) on the beverage machine 100, transmitting signals from an external device to the beverage machine 100, or the like. Upon the user selecting the beverage type (i.e., cappuccino, drip coffee, tea, soup, hot cocoa, or the like), information indicative of the user's selection is transmitted to the controller 120 due to the operable coupling between the controller 120 and the user input device 129. Upon the controller 120 receiving the information indicative of the user's beverage selection, the controller 120 will activate the pump 124 and open one of the first and second valves 125, 126 to flow the liquid from the reservoir tank 101 and into the cup 119 which is positioned beneath the jet and injector nozzles 106, 108. Specifically, upon the user selecting a hot beverage, the controller 120 will activate the pump 124 to pump the liquid from the reservoir tank 101, through the flow conduit 109, into and through the hot tanks 102, and through the manifold 103. The controller 120 will also activate one of the first and second valves 125, 126 into the open state so that the liquid can then flow from the manifold 103 through the jet dispense conduit 105 and the jet nozzle 106 or through the injector dispense conduit 107 and the injector nozzle 108 and into the cup 119 below. The controller 120 will activate the first valve 125 into the open state when the liquid is to be injected into the cup 119 at a higher velocity/pressure (such as for purposes of foaming a milk powder) and the controller 120 will activate the second valve 126 into the open state when the liquid is to be injected through the beverage ingredient container 112 and then into the cup 119 at a lower velocity/pressure.

Some beverages, such as cappuccino and latte, require the liquid to flow through the jet nozzle 106 and the injector nozzle 108 in various sequences. For example, the liquid may flow through the injector nozzle 108 and into the container 113 having milk powder as the beverage ingredient until the container 113 opens and the milk powder 113 falls into the cup 119 below. Next, the liquid may flow through the jet nozzle 106 to foam the milk powder. And next, the liquid may again flow through the injector nozzle 108 and into another container 113 containing coffee grounds as the beverage ingredient. The controller 120 is configured to open and close the first and second valves 125, 126 in a necessary sequence to achieve this specific flow of the liquid dependent upon the user selection on the user input device 129. If the user selects a cold beverage, the controller 120 will cause the liquid to be moved (i.e., pumped or the like) from the cold tank 111 to the manifold 103, and to then proceed through the jet nozzle 106 or the injector nozzle 108 as desired/needed to generate the desired beverage.

As mentioned above, an important feature of the beverage machine 100 is its ability to perform a priming operation at various times between vends to ensure that a consistent volume of liquid is dispensed at each vend and that the water delivery temperature is consistent at each vend. The priming operation also ensures that the beverage ingredient container 112 is opened in a consistent manner from one vend to another to maintain consistency in the beverage being generated or made with the beverage machine. The priming operation is generally performed automatically each time the beverage machine 100 receives instructions to vend a new beverage, but prior to the beverage machine 100 vending the new beverage. Specifically, in some embodiments each time a user instructs the beverage machine 100 to vend a new beverage, the beverage machine 100 will perform the priming operation before vending the new beverage. The priming operation may also be performed automatically each time the beverage machine 100 is powered on, although this is not the case in all embodiments.

In the exemplified embodiment, the beverage machine 100 does not perform the priming operation in exactly the same manner each time. That is, a volume of the liquid used in the priming operation is adjusted based on various factors. When a user instructs the beverage machine 100 to vend a beverage, the beverage machine 100 will first perform a priming operation before vending any new beverages. Thus, the user is required to wait until the priming operation is complete before the new beverage will be vended, which increases the user's wait time. People can be impatient, and thus reducing this wait time is beneficial and desirable. Thus, the beverage machine 100, and particularly the controller 120 thereof, is designed to receive certain information related to the temperature of the liquid in the hot tanks 102 and the idle time of the beverage machine 100 (which is the amount of time that has elapsed since an immediately preceding beverage vend with the beverage machine 100) to determine the amount of volume of the liquid to use during the priming operation. More volume of the liquid used during the priming operation equates to a longer wait time for the user, although more volume may be needed if there is a greater idle time or if the temperature of the liquid in the hot tanks 102 at start-up was low. Thus, the beverage machine 100 is designed to create a balance between the need to ensure that a sufficient volume of liquid is used during the priming operation to allow for consistent water volume and temperature during beverage vending while also minimizing user wait time.

In a priming operation, the controller 120 activates the pump 124 and opens the third valve 127 while keeping the first and second valves 125, 126 closed. As a result, during the priming operation the liquid will flow from the reservoir tank 101 into and through the flow conduit 109, from the flow conduit 109 into and through the hot tanks 102, from the hot tanks 102 into and through the manifold 103, from the manifold 103 into and through the recirculation conduit 104 via the third valve 127, and from the recirculation conduit 104 back to the reservoir tank 101. Thus, in the exemplified embodiment the reservoir tank 101, the flow conduit 109, the hot tanks 102, the manifold 103, and the recirculation conduit 104 collectively form a closed recirculation loop for the priming operation. It should be appreciated that the conduits may be modified from the exemplified embodiment, and that it is merely necessary that the reservoir tank 101, the hot tanks 102, and the recirculation conduit 104 form the closed recirculation loop in some embodiments. For example, the hot tanks 102 could be positioned immediately adjacent to the reservoir tank 101 thereby negating the need for the flow conduit 109. Furthermore, the manifold 103 may be replaced with one or more conduits extending from the hot tanks 102 to the jet conduit 105, the injector conduit 107, and/or the recirculation conduit 104. Regardless of the exact arrangement of the conduits and components of the fluid flow subsystem, there is a closed recirculation loop formed through which the liquid can flow during the priming operation.

During the priming operation, the liquid is heated by the hot tanks 102 so that the liquid passing through the closed recirculation loop is heated. This allows for the liquid that is going to be used in the next vend to have a consistent temperature each time the beverage machine 100 is used to vend a beverage. Specifically, when a new beverage is vended the first liquid that is used in generating the beverage is the liquid located between the hot tanks 102 and the jet and injector dispense conduits 105, 107 (including the liquid in the manifold 103). Thus, when a user instructs the beverage machine 100 to vend a hot drink, it is preferable that the liquid located between the hot tanks 102 and the dispense nozzles 106, 108 be hot, otherwise the initial liquid being used to generate the beverage will be cold, which will affect the temperature of the beverage once fully vended. The priming operation ensures that hot liquid is located in the conduit lines between the hot tank 102 and the dispense nozzles 106, 108. Specifically, because the priming operation takes place immediately prior to each vend, the liquid located in the manifold 103 and in any conduits between the hot tanks 102 and the manifold 103 has recently been heated to the desired temperature by the heaters 122 in the hot tanks 102. Furthermore, the priming operation ensures that the manifold 103 is completely full of the heated liquid prior to the next vend, which provides a consistent starting point during the vend and results in a consistent volume of the liquid being used during beverage vending.

Referring to FIGS. 1 and 3, one technique or method used by the beverage machine 100 for determining an appropriate volume of the liquid to use during the priming operation will be described. Specifically, FIG. 3 is a flow chart illustrating a process by which the volume for the priming operation is determined based on a temperature of the liquid in the hot tanks 102. Thus, the volume determined using this technique, method, or algorithm may be referred to herein as a temperature-based volume of liquid for the priming operation. In some embodiments, the temperature-based volume is only used for a first vend after an initial activation or start-up or boot-up of the beverage machine 100. That is, in some embodiments the temperature-based volume (and the associated method steps described with reference to FIG. 3) is not used for any vends after the first vend which takes place after the beverage machine 100 is activated from an off state to an on state. In other embodiments, the temperature-based volume may be used, or at least considered for use, for each priming operation regardless of whether or not it is the first vend after powering the beverage machine on.

In FIG. 3, step 300 indicates that the beverage machine 100 has been powered on. This is the first step in the process because it is the powering on of the beverage machine 100 that triggers the next step. Specifically, upon the beverage machine 100 being powered from the off state to the on state (such as by a user actuating the power switch 121 or the like as described herein above), the beverage machine 100 measures a start-up temperature of the liquid in the hot tanks 102 (step 301). That is, even before receiving instructions to vend a beverage, when the beverage machine 100 is altered from the off state to the on state, the beverage machine 100 determines the start-up temperature of the liquid in the hot tanks 102. This start-up temperature of the liquid in the hot tanks 102 may then be used in determining an amount of volume used during priming of the beverage machine 100 (i.e., the temperature-based volume). As described below, the priming volume determined using the start-up temperature (the temperature-based volume) may be superseded or overridden by a volume determined using an idle time (the time-based volume).

Next, at step 302, the beverage machine 302 receives a request to vend a beverage. Upon receiving a request to vend a beverage, the beverage machine 100 determines whether the start-up temperature of the liquid in the hot tank 102 calculated at step 301 is above or below a first threshold temperature (step 303). This is achieved in the exemplified embodiment in the following manner. The temperature sensor 123 monitors or measures the temperature of the liquid in the hot tank 102. The temperature sensor 123 either periodically, continuously, at set time intervals, or upon request by the controller 120, sends data indicative of the temperature of the liquid in the hot tank 102 to the controller 120 due to the operable coupling between the temperature sensor 123 and the controller 120. In the exemplified embodiment, immediately upon altering the beverage machine 100 from the off state to the on state the temperature sensor 123 transmits the temperature reading (i.e., the start-up temperature) to the controller 120 and the controller 120 records this temperature as the start-up temperature of the liquid in the hot tanks 102 (this may all be part of step 301 in some embodiments). Then, upon the beverage machine 100 being instructed to vend a beverage, the controller 120 determines whether the start-up temperature of the liquid in the hot tank 102 measured at step 301 is above or below the first threshold temperature. This may be achieved by the controller 120 comparing the temperature of the liquid in the hot tanks 102 to the first threshold temperature or using other techniques. In some embodiments, the first threshold temperature may be in a range of 30°C and 50°C, more specifically 35°C to 45°C, and still more specifically the first threshold temperature may be approximately 40°C or the first threshold temperature may be approximately 35°C (approximately including a plus/minus of 5%).

If the start-up temperature of the liquid in the hot tanks 102 is determined by the controller 120 to be less than the first threshold temperature (e.g., less than 40°C or less than 35°C or the like depending on the value of the first threshold temperature), the process moves to step 304. Thus, if the start-up temperature of the liquid in the hot tanks 102 is determined to be less than the first threshold temperature, than the controller 120 facilitates priming the beverage machine 100 with a first volume of liquid. In one embodiment, the first volume may be in a range of 50 ml to 70 ml, more specifically 55ml to 65 ml, and still more specifically approximately 60 ml (approximately including plus/minus 5%). Specifically, the controller 120 activates the pump 124 and opens the third valve 127 to flow the first volume of the liquid through the closed recirculation loop as described herein above. If the start-up temperature of the liquid in the hot tanks 102 is below the first threshold temperature, then the liquid in the hot tanks 102 at start-up (or boot-up or power on) of the beverage machine 100 was relatively cold so there is a need or desire to prime the beverage machine 100 with a greater volume of liquid than if the start-up temperature of the liquid in the hot tanks 102 was greater than the first threshold temperature. The term relatively cold should be emphasized here, because it is possible that the liquid in the hot tanks 102 is 39°C (or 34°C, or the like) and still below the first threshold temperature. While 39°C is not what one might think of as cold, it is relatively cold in terms of coffee brewing temperatures.

Next, if the start-up temperature of the liquid in the hot tanks 102 is determined to be above the first threshold temperature, than the process moves to step 305. At step 305, the controller 120 (or the beverage machine 100 generally) determines whether the start-up temperature of the liquid in the hot tank 102 is above a second threshold temperature. The second threshold temperature is greater than the first threshold temperature. In some embodiments, the second threshold temperature may be in a range of 80°C and 100°C, more specifically 85°C and 95°C, and still more specifically approximately 90°C (approximately including a plus/minus of 5%). If it is determined that the start-up temperature of the liquid in the hot tanks 102 is not above the second threshold temperature, than the process moves to step 306. In this situation, it has been determined that the start-up temperature of the liquid in the hot tanks 102 is (or was) above the first threshold temperature but below the second threshold temperature. Thus, the liquid in the hot tanks 102 may be considered warm in this situation (again, with the term "warm" being relative only, because clearly a temperature between 40°C and 90°C in the normal sense may be quite hot and not merely warm).

At step 306 when the beverage machine 100 or the controller 120 thereof determines that the start-up temperature of the liquid in the hot tank 102 is above the first threshold temperature and below the second threshold temperature, the controller 120 initiates priming the beverage machine 100 with a second volume of liquid. The second volume may be in a range of 35 ml to 50 ml, more specifically 40 ml to 50 ml, and still more specifically approximately 45 ml (approximately including plus/minus 5%). Specifically, the controller 120 activates the pump 124 and opens the third valve 127 to flow the second volume of the liquid through the closed recirculation loop as described herein above. The second volume of the liquid is less than the first volume of the liquid. This is because in the situation of step 306 the start-up up temperature of the liquid in the hot tanks 102 is hotter than in the situation of step 304 so less volume of the liquid is needed to be circulated for priming to achieve the consistent liquid delivery temperature as has been described herein.

Finally, if the start-up temperature of the liquid in the hot tank 102 is determined to be above the second threshold temperature, the process moves to step 307. In this situation, the start-up temperature of the liquid in the hot tanks 102 has been determined to be relatively hot (i.e., hotter than the situations at each of steps 306 and 304, and hotter than 90°C in accordance with the exemplary embodiment) and thus an even smaller volume of the liquid needs to be circulated during the priming operation. Thus, at step 307 the controller initiates priming the beverage machine 100 with a third volume of liquid. The third volume may be between 10 ml and 20 ml, or more specifically approximately 15 ml (approximately being plus/minus 5%). Specifically, the controller 120 activates the pump 124 and opens the third valve 127 to flow the third volume of the liquid through the closed recirculation loop as described herein above. The third volume of the liquid is less than the second volume of the liquid for the reasons described above.

In the exemplified embodiment, there are two threshold temperatures used in this process so that the beverage machine 100 is primed with one of three different volumes dependent upon the start-up temperature of the liquid in the hot tanks 102 (i.e., the temperature of the liquid in the hot tanks 102 measured upon the beverage machine 100 being powered from the off state to the on state). In some embodiments, there may just be a single threshold temperature used to determine whether to use a first volume or a second volume during the priming operation (first volume if below threshold temperature and second volume if above threshold temperature). In still other embodiments, there may be more than two threshold temperatures used so that more than three different volumes are selected from. If there are three threshold temperatures, than there are four volumes to select from for the priming operation, and so forth. Thus, the invention is not limited to the three-volume selection in all embodiments.

In some embodiments, the first volume is at least three times the third volume and the second volume is at least two times the third volume. In some embodiments the first volume is approximately four times the third volume and the second volume is approximately three times the third volume (approximately including plus or minus 5%). However, variations in the relationship between the first, second, and third volumes may be possible in some embodiments.

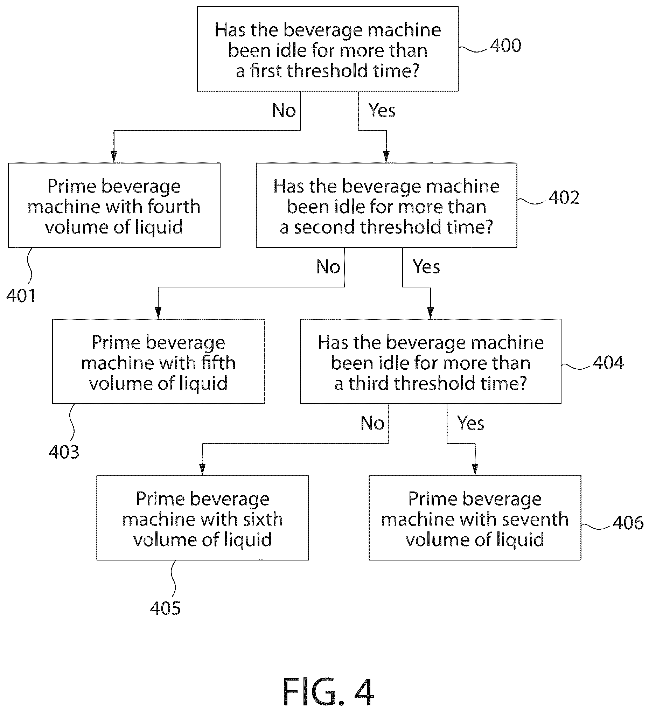

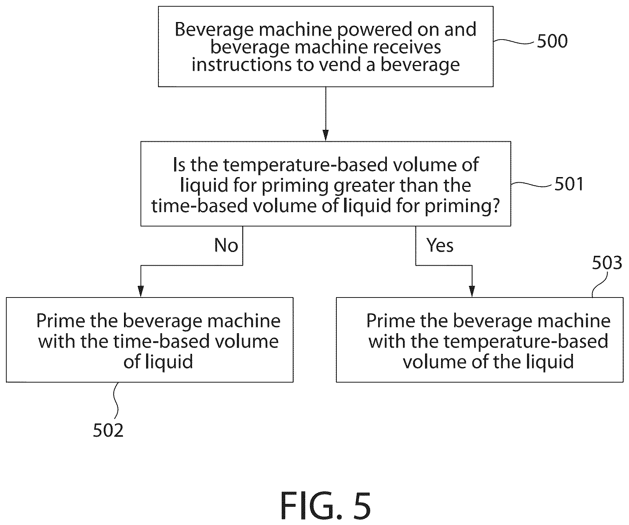

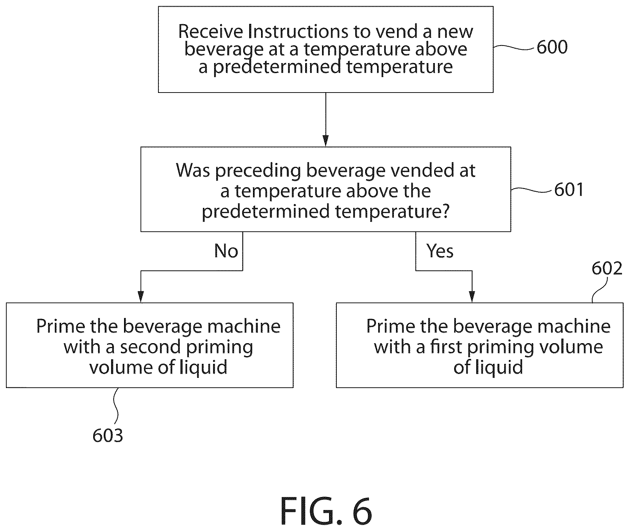

In some embodiments, the priming operation may take place in accordance with the flow chart of FIG. 3 upon an initial request being received by the beverage machine 100 to vend a beverage after power-on of the beverage machine 100. Specifically, the flow chart of FIG. 3 may be used in some embodiments only for a first vend after the beverage machine 100 is powered on. In other embodiments, the flow chart of FIG. 3 may be used to determine a priming volume for a prime taking place before all vends regardless of whether it is the first vend after the beverage machine 100 is powered on, unless superseded by a volume determined based on an idle time of the beverage machine 100 as described with reference to FIGS. 4 and 5. In certain exemplified embodiments, however, the temperature-based volume is only used for the first vend after a power-on occurrence because otherwise the start-up temperature is no longer relevant. For all other vends, the priming volume may be determined using the time-based approach described below with reference to FIG. 4 (unless a prior vend is a cold drink vend, then the approach described below with reference to FIG. 6 may be used).

In accordance with embodiments of the invention, when a user powers the beverage machine 100 from the off state to the on state, the beverage machine 100 and the controller 120 thereof may automatically determine the start-up temperature of the liquid in the hot tanks 102. Then, upon the beverage machine 100 receiving an instruction (i.e., input or the like) to vend a beverage, the beverage machine 100 may be primed with a temperature-based volume determined as set forth above based on the start-up temperature of the liquid in the hot tanks 102 as measured by the temperature sensor 123. However, as has been mentioned above, the temperature-based volume may not be used in some embodiments if a volume calculated using a time-based approach discussed below with reference to FIG. 4 exceeds the temperature-based volume.

Referring to FIGS. 1 and 4 concurrently, another technique or method used by the beverage machine 100 for determining an appropriate volume of the liquid to use during the priming operation will be described. Specifically, FIG. 4 is a flow chart illustrating a process by which the volume for the priming operation is determined based on an idle time of the beverage machine 100. As mentioned above, the idle time of the beverage machine 100 is the amount of time that the beverage machine 100 remains idle between beverage vends. Specifically, the idle time of the beverage machine 100 is the amount of time elapsed from an immediately preceding vend of a beverage to a current time during which a priming operation is to take place, with the current time generally being the receipt of instructions to vend another beverage (because the priming operation may take place each time the beverage machine 100 is instructed to vend a new beverage).

The volume of liquid to be used during the priming operation using the process shown in FIG. 4 may be referred to herein as a time-based volume of liquid for the priming operation. The time-based volume of liquid may be used to calculate the volume of liquid for the priming operation when the beverage machine 100 remains in the on state (has not been powered off) and instructions are received by the beverage machine 100 to vend a new beverage. Thus, in some embodiments the time-based volume of liquid may be used to calculate the volume of liquid for the priming operation when instructions are received to vend a new beverage and it is not the first new beverage to be vended after the beverage machine was powered into the on state. Furthermore, in some embodiments, even when the vend is going to be the first vend after the beverage machine 100 is powered into the on state, if the time-based volume of liquid is greater than the temperature-based volume of liquid, then the time-based volume of liquid may also be used for the priming operation upon the beverage machine 100 being altered from the off state to the on state, as discussed in greater detail below with reference to FIG. 5.

Referring to step 400, the first step in the method/process of FIG. 4 is to determine whether the beverage machine 100 has been idle for a length of time that is greater than a first threshold time. In some embodiments, the first threshold time may be five minutes, although the invention is not to be so limited and the first threshold time may be five minutes, ten minutes, fifteen minutes, twenty minutes, twenty-five minutes, or thirty minutes in various different embodiments. The reason for the time-based method is that the longer the time between vends, the cooler the liquid in the hot tanks 102 becomes. Thus, for a shorter idle time the volume of liquid needed during the priming operation is less than for a longer idle time.

The beverage machine 100 is able to determine the idle time due to the coupling between the timer 128 (shown in FIG. 2) and the controller 120. Specifically, upon completion of a vend, the timer 128 begins to track time elapsed. The timer 128 may continue to track time elapsed regardless of whether the beverage machine 100 is in the off state or the on state. The timer 128 may send the time elapsed to the controller 120 in each situation where the controller 120 is determining the proper volume for a priming operation. Thus, the timer 128 may send the time elapsed to the controller 120 when the beverage machine 100 is altered from the off state to the on state. Additionally, the timer 128 may send the time elapsed to the controller 120 each time a user instructs the beverage machine 100 to vend a beverage (by making selections on the user input device 129, for example). Upon receiving the time elapsed or idle time for the beverage machine 100, the controller 120 compares the time elapsed to one or more threshold times to determine the proper volume of the liquid to be used for the priming operation.

If it is determined at step 400 that the beverage machine 100 has not been idle for more than the first threshold time, the process moves to step 401. At step 401, the beverage machine 100 or the controller 120 thereof initiates a priming operation using a fourth volume of liquid. The fourth volume may be between 10 ml and 20 ml, and more specifically approximately 15 ml (approximately being plus/minus 5%). Specifically, the controller 120 activates the pump 124 and opens the third valve 127 to flow the fourth volume of the liquid through the closed recirculation loop as described herein above. In some embodiments, the fourth volume of liquid may be the same as the third volume of liquid.

If it is determined at step 400 that the beverage machine has been idle for more than the first threshold time, the process moves to step 402. At step 402, the beverage machine 100 determines whether the beverage machine 100 has been idle for more than a second threshold time. In some embodiments, the second threshold time may be one hour. In other embodiments, the second threshold time may be thirty minutes, or forty minutes, or fifty minutes, or seventy minutes, or eighty minutes, or ninety minutes, or one-hundred minutes, or one-hundred ten minutes, or two hours. Thus, the exact amount of time for the second threshold is not to be limiting of the invention in all embodiments and it may be selected as a desirable time by the manufacturer or by the end user. However, in all embodiments the second threshold time is greater than the first threshold time.

If it is determined that the idle time for the beverage machine 100 is more than the first threshold time but less than the second threshold time, the method/process moves to step 403. At step 403, the beverage machine 100 or the controller 120 thereof initiates a priming operation using a fifth volume of liquid. The fifth volume may be between 25 ml and 35 ml, and more specifically approximately 30 ml (approximately including plus/minus 5%). Specifically, the controller 120 activates the pump 124 and opens the third valve 127 to flow the fifth volume of the liquid through the closed recirculation loop as described herein above. The fifth volume of the liquid is greater than the fourth volume of the liquid. Specifically, because at step 403 the beverage machine 100 has been idle for longer than at step 401, the beverage machine 100 is primed with a greater volume of the liquid because it is likely that the liquid in the conduits or hot tanks 102 has cooled more in the situation of step 403 than in the situation of step 401. In some embodiments, the fourth volume of liquid may be greater than the third volume of liquid and less than the second volume of liquid.

If it is determined that the beverage machine 100 has been idle for more than the second threshold time, then the method/process moves to step 404. At step 404, the beverage machine 100 determines whether the beverage machine 100 has been idle for more than a third threshold time. The third threshold time is greater than the second threshold time and the first threshold time. In some embodiments, the third threshold time may be three hours. In other embodiments, the third threshold time may be two hours, or four hours, or five hours, or six hours, or seven hours, or eight hours, or nine hours, or ten hours. Thus, the exact amount of time for the third threshold is not to be limiting of the invention in all embodiments and it may be selected as a desirable time by the manufacturer or by the end user.

In one particular embodiment, the first threshold time may be approximately five minutes, the second threshold time may be approximately one hour, and the third threshold time may be approximately three hours. The term approximately as used herein in this context allows for an adjustment upward or downward of 10% from the provided time.

If it is determined that the idle time for the beverage machine 100 is more than the second threshold time but less than the third threshold time, the method/process moves to step 405. At step 405, the beverage machine 100 or the controller 120 thereof initiates a priming operation using a sixth volume of liquid. The sixth volume may be between 40 ml and 50 ml, and more specifically approximately 45 ml (approximately including plus/minus 5%). Specifically, the controller 120 activates the pump 124 and opens the third valve 127 to flow the sixth volume of the liquid through the closed recirculation loop as described herein above. The sixth volume of the liquid is greater than the fifth volume of the liquid. Specifically, because at step 405 the beverage machine 100 has been idle for longer than at step 403, the beverage machine 100 is primed with a greater volume of the liquid because it is likely that the liquid in the conduits or hot tanks 102 has cooled more in the situation of step 405 than in the situation of step 403. In some embodiments, the sixth volume of liquid may approximately equal to the second volume of liquid.

If it is determine at step 404 that the beverage machine 100 has been idle for longer than the third threshold time, the method/process moves to step 406. At step 406, the beverage machine 100 or the controller 120 thereof initiates a priming operation using a seventh volume of liquid. The seventh volume of liquid may be between 50 ml and 70 ml, more specifically between 55 ml and 65 ml, and still more specifically approximately 60 ml (approximately including plus/minus 5%). Specifically, the controller 120 activates the pump and opens the third valve 127 to flow the seventh volume of the liquid through the closed recirculation loop as described herein above. The seventh volume of the liquid is greater than the sixth volume of the liquid. Specifically, because at step 406 the beverage machine 100 has been idle for longer than at step 405, the beverage machine 100 is primed with a greater volume of the liquid because it is likely that the liquid in the conduits or hot tanks 102 has cooled more in the situation of step 406 than in the situation of step 405. In some embodiments, the seventh volume of liquid may be approximately equal to the first volume of liquid.

Referring to FIG. 5, a flow chart is provided illustrating the steps for determining whether to use the temperature-based volume determined using the method/process discussed above with regard to FIG. 3 or the time-based volume determined using the method/process discussed above with regard to FIG. 4 for priming the beverage machine 100. In some embodiments, when the beverage machine 100 is instructed to vend a beverage and it is not the first beverage vend subsequent to the beverage machine being powered into the on state, the beverage machine 100 will use the time-based approach to determine the volume to use during priming. In some embodiments, when the beverage machine 100 is powered into the off state in between vends, the beverage machine 100 will use the temperature-based approach to determine the volume of liquid to use during the priming operation upon the beverage machine 100 being powered back into the on state. In other embodiments, when the beverage machine 100 is powered into the off state in between vends, the beverage machine 100 will use the greater of the volume determined from the temperature-based approach of FIG. 3 and the volume determined using the time-based approach of FIG. 4 upon the beverage machine 100 being powered back into the on state for a priming operation. Thus, in some embodiments, for a first vend after the beverage machine 100 has been powered into the on state, if the volume from the time-based approach exceeds the volume from the temperature-based approach, then the volume from the time-based approach will be used, and vice versa.

Thus, at step 500, the beverage machine is powered from the off state to the on state and the beverage machine 100 receives instructions to vend a beverage. In some embodiments, the powering of the beverage machine 100 from the off state to the on state triggers or initiates the process/method of FIG. 5 in some embodiments. In other embodiments, the process/method of FIG. 5 take place each time the beverage machine 100 receives instructions to vend a new beverage to determine a proper priming volume.

In the exemplified embodiment, upon the beverage machine 100 being powered from the off state to the on state and receiving instructions to vend a beverage, the beverage machine 100 (or the controller 210 thereof) will perform the temperature-based priming volume calculations discussed above with regard to FIG. 3 and the time-based priming calculations discussed above with regard to FIG. 4. Then, at step 501, the beverage machine 100 or the controller 120 thereof will determine whether the temperature-based volume or the time-based volume is greater.

If the time-based volume is greater, the process will move to step 502 and the beverage machine 100 or the controller 120 thereof will initiate a priming operation using the volume of liquid determined using the time-based approach of FIG. 4. If the temperature-based volume is greater, the process will move to step 503 and the beverage machine 100 or the controller 120 thereof will initiate a priming operation using the volume of liquid determined using the temperature-based approach of FIG. 3. In either case, the priming operation comprises the controller 120 activating the pump and opening the third valve 127 to flow the volume of the liquid through the closed recirculation loop as described herein above. Thus, upon powering the beverage machine 100 from the off state to the on state and the beverage machine 100 receiving instructions to vend the first beverage subsequent to powering the beverage machine 100 from the off state to the on state, the beverage machine 100 may perform the steps of FIG. 3 and the steps of FIG. 4 and may then determine whether the volume determined from FIG. 3 or the volume determined from FIG. 4 is greater, and will initiate the priming operation with the volume that is greater.

Referring to FIG. 6, a flow diagram is provided for determining a volume of liquid to use during the priming operation in accordance with another embodiment. FIG. 6 relates to the beverage machine 100 when the cold tank 111 is attached so that the beverage machine 100 is capable of vending or generating drinks at multiple temperatures. Specifically, the beverage machine 100 may vend hot drinks by flowing the liquid from the reservoir tank 101 through the flow conduit, the hot tanks 102, and the manifold 103 to one of the jet and injector conduits 106, 108. Additionally, the beverage machine 100 may vend cold drinks by flowing the liquid from the cold tank 111 to the manifold 103 and to one of the jet and injector conduits 106, 108. Whether the beverage machine 100 vends a cold drink or a hot drink may be dictated by the controller 120 upon the controller 120 receiving instructions from the user input device 129 regarding the type of drink selected by the user to be vended.

In the embodiment of FIG. 6, the first step in the process, step 600, is the beverage machine 100 receiving instructions to vend a new beverage at a temperature that is above a predetermined temperature. The new beverage is one that would be considered a hot beverage, such as hot coffee, hot tea, hot chocolate, or the like. Thus, the predetermined temperature may be 60°C, or 70°C, or 80°C, or 90°C in various different embodiments. As noted above, before vending a new beverage, in some embodiments the beverage machine 100 will initiate a priming operation to prime the beverage machine 100 to ensure a consistent vend volume and temperature and a consistent opening of the beverage ingredient container 112. Thus, upon instructing the beverage machine 100 to vend a new beverage (such as by interaction with the user input device 129 or the like), the process moves to step 601.

Upon receiving instructions to vend a new beverage, at step 601 the beverage machine 100 (or the controller 120 thereof) will determine whether the preceding beverage vended with the beverage machine 100 was vended at a temperature that was above or below the predetermined temperature. That is, the beverage machine 100 will determine whether the preceding beverage was a cold beverage or a hot beverage. The preceding beverage is the beverage that was made in the immediately preceding vend using the beverage machine 100.

If the preceding beverage was vended at a temperature above the predetermined temperature (i.e., the preceding beverage was a hot beverage), the process moves to step 602. At step 602, the beverage machine 100 or controller 120 thereof initiates a priming operation using a first priming volume of liquid. In this embodiment, the first priming volume of liquid may be the volume calculated using the time-based approach discussed above with reference to FIG. 4 or the temperature-based approach discussed above with regard to FIG. 3.

If the preceding beverage was vended at a temperature below the predetermined temperature (i.e., the preceding beverage was a cold beverage), the process moves to step 603. At step 603, the beverage machine 100 or controller 120 thereof initiates a priming operation using a second priming volume of liquid. The second priming volume may be a beverage-type based priming volume because it is the result of a prior beverage that was vended using the machine having been a "cold" beverage. The second priming volume of liquid is greater than the first priming volume of liquid regardless of whether the first priming volume of liquid is the first, second, third, fourth, fifth, sixth, or seventh volume noted above. Thus, the second priming volume of liquid is greater than the first and seventh volumes noted above. In some embodiments, the second priming volume may be at least four times, or at least five times the third and fourth volumes noted above. Specifically, because in this instance the previous vend was a cold beverage, the conduits and the like may be somewhat cooled. Thus, in order to ensure that the next beverage made at a higher temperature has the desired temperature, the beverage machine 100 is primed with a greater volume of the liquid. This allows more time for the conduits and the like to heat up by flowing a greater volume of heated water through them prior to the beverage machine 100 vending the new beverage at the elevated temperature.

There are specific values provided herein for the volumes (i.e., the first, second, third, fourth, fifth, sixth, and seventh volumes). However, the invention is not limited to those specific values for the volumes in all embodiments. Furthermore, in some embodiments each priming operation takes place for a predetermined period of time, not with a predetermined volume. The volume is generally known because the flow rate is known, although within a tolerance. Thus, there is also a tolerance for the volume and it could fall outside of the noted ranges in some embodiments. Thus, while the volume ranges are preferred in exemplary embodiments, other volumes could be used in other embodiments. Time rather than volume is used to dictate end of priming operation because it is the priming time that is influential for the thermal benefits achieved by the priming operation.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the spirit and scope of the invention should be construed broadly as set forth in the appended claims.

### Exemplary Claim Set Forming part of the Description of the Invention

Exemplary claim 1. A method of priming a beverage machine comprising:
upon a beverage machine being powered from an off state to an on state, measuring a start-up temperature of a liquid in a hot tank of the beverage machine;
upon the beverage machine receiving instructions to vend a beverage, priming the beverage machine by circulating a priming volume of the liquid through a closed loop that comprises a reservoir tank, the hot tank, and a recirculation conduit; and
wherein the priming volume is a first volume when the start-up temperature of the liquid in the hot tank is below a first threshold temperature and a second volume when the start-up temperature of the liquid in the hot tank is above the first threshold temperature, the first volume being greater than the second volume.

Exemplary claim 2. The method according to claim 1 wherein the priming volume is the second volume when the start-up temperature of the liquid in the hot tank is above the first threshold temperature and below a second threshold temperature and a third volume when the start-up temperature of the liquid in the hot tank is above the second threshold temperature, the second threshold temperature being greater than the first threshold temperature and the second volume being greater than the third volume.

Exemplary claim 3. The method according to claim 2 wherein the second volume is at least two times the third volume and the first volume is at least three times the third volume.

Exemplary claim 4. The method according to any one of claims 1 to 3 further comprising:
upon the beverage machine receiving the instructions to vend the beverage, determining a time-based volume of liquid for priming the beverage machine based on an idle time of the beverage machine; and
wherein the priming volume is the time-based volume when: (1) the start-up temperature of the liquid in the hot tank is below the first threshold temperature and the time-based volume is greater than the first volume; or (2) the start-up temperature of the liquid in the hot tank is above the first threshold temperature and the time-based volume is greater than the second volume.

Exemplary claim 5. The method according to claim 4 wherein the start-up temperature is used to determine the priming volume only for a first vend after powering the beverage machine from the off state to the on state, and wherein the priming volume is the time-based volume for each vend subsequent to the first vend and prior to transitioning the beverage machine from the on state to the off state.

Exemplary claim 6. The method according to any one of claims 1 to 5 wherein the start-up temperature of the liquid in the hot tank is measured with a temperature sensor that is operably coupled to a controller, and wherein the priming the beverage machine comprises the controller automatically opening a valve positioned between the hot tank and the recirculation conduit and activating a pump to circulate the priming volume of the liquid through the closed loop.

Exemplary claim 7. The method according to any one of claims 1 to 6 wherein the measuring the start-up temperature of the liquid in the hot tank occurs automatically upon the beverage machine being powered from the off state to the on state, and wherein the priming the beverage machine occurs automatically upon the beverage machine receiving the instructions to vend the beverage and prior to the beverage machine vending the beverage.

Exemplary claim 8. A beverage machine comprising:
a fluid subsystem comprising a reservoir tank, a hot tank, at least one dispensing conduit, and at least one recirculation conduit that are fluidly coupled together, wherein the reservoir tank, the hot tank and the recirculation conduit form a recirculation loop;
an electronics subsystem comprising a heater for heating a liquid in the hot tank, a temperature sensor for measuring a temperature of the liquid in the hot tank, a pump, a first normally-closed valve positioned between the hot tank and the at least one dispensing conduit, a second normally-closed valve positioned between the hot tank and the at least one recirculation conduit, and a controller operably coupled to the heater, the temperature sensor, the pump, and the first and second normally-closed valves;
wherein upon the beverage machine being powered from an off state to an on state, the controller is configured to record a start-up temperature of the liquid in the hot tank as measured by the temperature sensor;
wherein upon the beverage machine receiving instructions to vend a beverage, the controller is configured to prime the beverage machine by activating the pump and opening the second normally-closed valve to circulate a priming volume of the liquid through the recirculation loop; and
wherein the priming volume is a first volume when the start-up temperature of the liquid in the hot tank is below a first threshold temperature and a second volume when the start-up temperature of the liquid in the hot tank is above the first threshold temperature, the first volume being greater than the second volume.

Exemplary claim 9. The beverage machine according to claim 8 wherein the priming volume is the second volume when the start-up temperature of the liquid in the hot tank is above the first threshold temperature and below a second threshold temperature that is greater than the first threshold temperature, and a third volume when the start-up temperature of the liquid in the hot tank is above the second threshold temperature, the second volume being greater than the third volume.

Exemplary claim 10. The beverage machine according to claim 9 wherein the second volume is at least two times the third volume, and wherein the first volume is at least three times the third volume.

Exemplary claim 11. The beverage machine according to any one of claims 8 to 10
further comprising:
the electronics subsystem comprising a timer operably coupled to the controller for monitoring an idle time of the beverage machine;
wherein upon the beverage machine receiving the instructions to vend the beverage, the controller is configured to determine a time-based volume of liquid for priming the beverage machine based on the idle time; and
wherein the priming volume is the time-based volume when: (1) the start-up temperature of the liquid in the hot tank is below the first threshold temperature and the time-based volume is greater than the first volume; or (2) the start-up temperature of the liquid in the hot tank is above the first threshold temperature and the time-based volume is greater than the second volume.

Exemplary claim 12. A method of priming a beverage machine comprising:
upon a beverage machine being powered from an off state to an on state:
   measuring a start-up temperature of a liquid in a hot tank of the beverage machine;
upon the beverage machine receiving instructions to vend a beverage and prior to vending the beverage:
   determining an idle time of the beverage machine; and
   priming the beverage machine by circulating a priming volume of the liquid through a closed loop that comprises a reservoir tank, the hot tank, and a recirculation conduit; and
wherein the priming volume is a greater of a temperature-based volume determined based on the start-up temperature of the liquid in the hot tank and a time-based volume determined based on the idle time of the beverage machine.

Exemplary claim 13. The method according to claim 12 wherein determining the temperature-based volume comprises measuring the start-up temperature of the liquid in the hot tank of the beverage machine such that the temperature-based volume is a first volume when the temperature of the liquid is below a first threshold temperature, a second volume when the temperature of the liquid is above the first threshold temperature and below a second threshold temperature that is greater than the first threshold temperature, and a third volume when the temperature of the liquid is above the second threshold temperature, the first volume being greater than the second volume and the second volume being greater than the third volume.

Exemplary claim 14. The method according to claim 12 or claim 13 wherein determining the time-based volume comprises monitoring the idle time as an amount of time elapsed since an immediately preceding vend with the beverage machine such that the time-based volume is a fourth volume when the idle time is less than a first threshold time, a fifth volume when the idle time is greater than the first threshold time and less than a second threshold time, a sixth volume when the idle time is greater than the second threshold time and less than a third threshold time, and a seventh volume when the idle time is greater than the third threshold time, the seventh volume being greater than the sixth volume, the sixth volume being greater than the fifth volume, and the fifth volume being greater than the fourth volume.

Exemplary claim 15. The method according to claim 14 wherein the third and fourth volumes are the same, wherein the second and sixth volumes and the same, and wherein the first and seventh volumes are the same.

Exemplary claim 16. The method according to any one of claims 12 to 15 wherein determining the temperature-based volume occurs automatically upon the beverage machine being powered from the off state to the on state, and wherein the determining the time-based volume and priming the beverage machine occur automatically upon the first activation of the beverage machine.

Exemplary claim 17. A method of priming a beverage machine that is configured to vend beverages at multiple temperatures, the method comprising:
upon receiving instructions to vend a beverage at a temperature that is above a pre-determined temperature and prior to vending the beverage, priming the beverage machine by circulating a priming volume of liquid through a closed recirculation loop of the beverage machine that comprises a reservoir tank, a hot tank, and a recirculation conduit;
wherein the priming volume of the liquid is a first priming volume when a preceding beverage made in an immediately preceding beverage vend was above the predetermined temperature; and
wherein the priming volume of the liquid is a second priming volume when the preceding beverage made in the immediately preceding beverage vend was below the predetermined temperature, the second volume being greater than the first volume.

Exemplary claim 18. The method according to claim 17 wherein when the preceding beverage made in the immediately preceding beverage vend was above the predetermined temperature, measuring a temperature of the liquid in the hot tank of the beverage machine to determine the first priming volume, wherein the first priming volume is a first volume when the temperature of the liquid in the hot tank of the beverage machine is below a first threshold temperature, the first priming volume is a second volume when the temperature of the liquid in the hot tank of the beverage machine is above the first threshold temperature and below a second threshold temperature that is greater than the first threshold temperature, and the first priming volume is a third volume when the temperature of the liquid in the hot tank of the beverage machine is above the second threshold temperature, the first volume being greater than the second volume, the second volume being greater than the third volume, and the second priming volume being greater than the first volume.

Exemplary claim 19. The method according to claim 17 wherein when the preceding beverage made in the immediately preceding beverage vend was above the predetermined temperature, monitoring an idle time as an amount of time elapsed since the immediately preceding vend to determine the first priming volume, wherein the first priming volume is a fourth volume when the idle time is less than a first threshold time, a fifth volume when the idle time is greater than the first threshold time and less than a second threshold time, a sixth volume when the idle time is greater than the second threshold time and less than a third threshold time, and a seventh volume when the idle time is greater than the third threshold time, the seventh volume being greater than the sixth volume, the sixth volume being greater than the fifth volume, and the fifth volume being greater than the fourth volume.

20. A beverage machine comprising:
a fluid subsystem comprising a reservoir tank, a hot tank, a cold tank, at least one dispensing conduit, and at least one recirculation conduit that are fluidly coupled together, wherein the reservoir tank, the hot tank and the recirculation conduit form a recirculation loop;
an electronics subsystem comprising a heater for heating a liquid in the hot tank, a temperature sensor for measuring a temperature of the liquid in the hot tank, a pump, a first normally-closed valve positioned between the hot tank and the at least one dispensing conduit, a second normally-closed valve positioned between the hot tank and the at least one recirculation conduit, and a controller operably coupled to the heater, the temperature sensor, the pump, and the first and second normally-closed valves;
wherein upon the beverage machine receiving instructions to vend a beverage, the controller is configured to prime the beverage machine by activating the pump and opening the second normally-closed valve to circulate a priming volume of the liquid through the recirculation loop; and
wherein the priming volume is a first volume when an immediately preceding beverage vended with the beverage machine had a vend temperature that is above the predetermined temperature and a second volume when the immediately preceding beverage vended with the beverage machine had a vend temperature that is below the predetermined temperature, the second volume being greater than the second volume.

Exemplary claim 21. A method of priming a beverage machine comprising:
upon the beverage machine receiving instructions to vend a beverage and prior to vending the beverage:
   determining an idle time of the beverage machine; and
   priming the beverage machine by circulating a priming volume of the liquid through a closed loop that comprises a reservoir tank, the hot tank, and a recirculation conduit; and
wherein the priming volume is a time-based volume determined based on the idle time of the beverage machine, unless overridden due to one of a temperature-based volume or a prior beverage-type based volume being greater than the time-based volume.

Exemplary claim 22. The method according to claim 21 further comprising:
wherein the time-based volume is a first volume when the idle time is below a first threshold period of time and a second volume when the idle time is above the first threshold period of time, the second volume being greater than the first volume;
wherein the temperature-based volume is used only for a first vend after powering the beverage machine from an off state to an on state and only when the temperature-based volume is greater than the time-based volume, and wherein the temperature-based volume is a third volume when a start-up temperature of a liquid in the hot tank is below a first threshold temperature and a fourth volume when the start-up temperature of the liquid in the hot tank is above the first threshold temperature, the third volume being greater than the fourth volume; and
wherein the beverage-type based volume is used each instance at which a preceding beverage made in an immediately preceding beverage vend was a cold beverage, the beverage-type based volume being greater than any of the time-based volumes and any of the temperature-based volumes.

Exemplary claim 23. A method of priming a beverage machine comprising:
upon the beverage machine receiving instructions to vend a beverage and prior to vending the beverage:
   determining a time-based priming volume based on an idle time of the beverage machine;
   determining whether the vend is a first vend after the beverage machine has been powered from an off state to an on state, and if so determining a temperature-based priming volume based on a temperature of a liquid in one or more hot tanks of the beverage machine at start-up; and
   determining whether a preceding beverage made in an immediately preceding beverage vend was vended at a temperature below a predetermined beverage temperature, and if so determining a beverage-type based priming volume; and
   priming the beverage machine by circulating a priming volume of the liquid through a closed loop that comprises a reservoir tank, the one or more hot tanks, and a recirculation conduit; and
wherein the priming volume is a greater of the time-based priming volume, the temperature-based priming volume, and the beverage-type based priming volume.

Exemplary claim 24. The method according to claim 23 wherein the priming volume is always the beverage-type based priming volume when the preceding beverage made in the immediately preceding beverage vend was vended at the temperature below the predetermined beverage temperature.

## Claims

1. A method of priming a beverage machine that is configured to vend beverages at multiple temperatures, the method comprising:
upon receiving instructions to vend a beverage at a temperature that is above a pre-determined temperature and prior to vending the beverage, priming the beverage machine by circulating a priming volume of liquid through a closed recirculation loop of the beverage machine that comprises a reservoir tank, a hot tank, and a recirculation conduit;
wherein the priming volume of the liquid is a first priming volume when a preceding beverage made in an immediately preceding beverage vend was above the predetermined temperature; and
wherein the priming volume of the liquid is a second priming volume when the preceding beverage made in the immediately preceding beverage vend was below the predetermined temperature, the second volume being greater than the first volume.

2. The method according to claim 1 wherein when the preceding beverage made in the immediately preceding beverage vend was above the predetermined temperature, measuring a temperature of the liquid in the hot tank of the beverage machine to determine the first priming volume, wherein the first priming volume is a first volume when the temperature of the liquid in the hot tank of the beverage machine is below a first threshold temperature, the first priming volume is a second volume when the temperature of the liquid in the hot tank of the beverage machine is above the first threshold temperature and below a second threshold temperature that is greater than the first threshold temperature, and the first priming volume is a third volume when the temperature of the liquid in the hot tank of the beverage machine is above the second threshold temperature, the first volume being greater than the second volume, the second volume being greater than the third volume, and the second priming volume being greater than the first volume.

3. The method according to claim 1 wherein when the preceding beverage made in the immediately preceding beverage vend was above the predetermined temperature, monitoring an idle time as an amount of time elapsed since the immediately preceding vend to determine the first priming volume, wherein the first priming volume is a fourth volume when the idle time is less than a first threshold time, a fifth volume when the idle time is greater than the first threshold time and less than a second threshold time, a sixth volume when the idle time is greater than the second threshold time and less than a third threshold time, and a seventh volume when the idle time is greater than the third threshold time, the seventh volume being greater than the sixth volume, the sixth volume being greater than the fifth volume, and the fifth volume being greater than the fourth volume.

4. A beverage machine comprising:
a fluid subsystem comprising a reservoir tank, a hot tank, a cold tank, at least one dispensing conduit, and at least one recirculation conduit that are fluidly coupled together, wherein the reservoir tank, the hot tank and the recirculation conduit form a recirculation loop;
an electronics subsystem comprising a heater for heating a liquid in the hot tank, a temperature sensor for measuring a temperature of the liquid in the hot tank, a pump, a first normally-closed valve positioned between the hot tank and the at least one dispensing conduit, a second normally-closed valve positioned between the hot tank and the at least one recirculation conduit, and a controller operably coupled to the heater, the temperature sensor, the pump, and the first and second normally-closed valves;
wherein upon the beverage machine receiving instructions to vend a beverage, the controller is configured to prime the beverage machine by activating the pump and opening the second normally-closed valve to circulate a priming volume of the liquid through the recirculation loop; and
wherein the priming volume is a first volume when an immediately preceding beverage vended with the beverage machine had a vend temperature that is above the predetermined temperature and a second volume when the immediately preceding beverage vended with the beverage machine had a vend temperature that is below the predetermined temperature, the second volume being greater than the second volume.

5. A method of priming a beverage machine comprising:
upon a beverage machine being powered from an off state to an on state:
measuring a start-up temperature of a liquid in a hot tank of the beverage machine;
upon the beverage machine receiving instructions to vend a beverage and prior to vending the beverage:
determining an idle time of the beverage machine; and
priming the beverage machine by circulating a priming volume of the liquid through a closed loop that comprises a reservoir tank, the hot tank, and a recirculation conduit; and
wherein the priming volume is a greater of a temperature-based volume determined based on the start-up temperature of the liquid in the hot tank and a time-based volume determined based on the idle time of the beverage machine.

6. The method according to claim 5 wherein determining the temperature-based volume comprises measuring the start-up temperature of the liquid in the hot tank of the beverage machine such that the temperature-based volume is a first volume when the temperature of the liquid is below a first threshold temperature, a second volume when the temperature of the liquid is above the first threshold temperature and below a second threshold temperature that is greater than the first threshold temperature, and a third volume when the temperature of the liquid is above the second threshold temperature, the first volume being greater than the second volume and the second volume being greater than the third volume.

7. The method according to claim 5 or claim 6 wherein determining the time-based volume comprises monitoring the idle time as an amount of time elapsed since an immediately preceding vend with the beverage machine such that the time-based volume is a fourth volume when the idle time is less than a first threshold time, a fifth volume when the idle time is greater than the first threshold time and less than a second threshold time, a sixth volume when the idle time is greater than the second threshold time and less than a third threshold time, and a seventh volume when the idle time is greater than the third threshold time, the seventh volume being greater than the sixth volume, the sixth volume being greater than the fifth volume, and the fifth volume being greater than the fourth volume.

8. The method according to claim 7 wherein the third and fourth volumes are the same, wherein the second and sixth volumes and the same, and wherein the first and seventh volumes are the same.

9. The method according to any one of claims 5 to 8 wherein determining the temperature-based volume occurs automatically upon the beverage machine being powered from the off state to the on state, and wherein the determining the time-based volume and priming the beverage machine occur automatically upon the first activation of the beverage machine.

10. A method of priming a beverage machine comprising:
upon the beverage machine receiving instructions to vend a beverage and prior to vending the beverage:
determining an idle time of the beverage machine; and
priming the beverage machine by circulating a priming volume of the liquid through a closed loop that comprises a reservoir tank, the hot tank, and a recirculation conduit; and
wherein the priming volume is a time-based volume determined based on the idle time of the beverage machine, unless overridden due to one of a temperature-based volume or a prior beverage-type based volume being greater than the time-based volume.

11. The method according to claim 10 further comprising:
wherein the time-based volume is a first volume when the idle time is below a first threshold period of time and a second volume when the idle time is above the first threshold period of time, the second volume being greater than the first volume;
wherein the temperature-based volume is used only for a first vend after powering the beverage machine from an off state to an on state and only when the temperature-based volume is greater than the time-based volume, and wherein the temperature-based volume is a third volume when a start-up temperature of a liquid in the hot tank is below a first threshold temperature and a fourth volume when the start-up temperature of the liquid in the hot tank is above the first threshold temperature, the third volume being greater than the fourth volume; and
wherein the beverage-type based volume is used each instance at which a preceding beverage made in an immediately preceding beverage vend was a cold beverage, the beverage-type based volume being greater than any of the time-based volumes and any of the temperature-based volumes.

12. A method of priming a beverage machine comprising:
upon the beverage machine receiving instructions to vend a beverage and prior to vending the beverage:
determining a time-based priming volume based on an idle time of the beverage machine;
determining whether the vend is a first vend after the beverage machine has been powered from an off state to an on state, and if so determining a temperature-based priming volume based on a temperature of a liquid in one or more hot tanks of the beverage machine at start-up; and
determining whether a preceding beverage made in an immediately preceding beverage vend was vended at a temperature below a predetermined beverage temperature, and if so determining a beverage-type based priming volume; and
priming the beverage machine by circulating a priming volume of the liquid through a closed loop that comprises a reservoir tank, the one or more hot tanks, and a recirculation conduit; and
wherein the priming volume is a greater of the time-based priming volume, the temperature-based priming volume, and the beverage-type based priming volume.

13. The method according to claim 12 wherein the priming volume is always the beverage-type based priming volume when the preceding beverage made in the immediately preceding beverage vend was vended at the temperature below the predetermined beverage temperature.
